# EUROPÄISCHE PATENTSCHRIFT

(11) **EP 2 881 635 B1**
(45) Veröffentlichungstag und Bekanntmachung des Hinweises auf die Patenterteilung: **08.02.2017**
(21) Anmeldenummer: 14191194.1
(22) Anmeldetag: 31.10.2014
(51) Int. Cl.: F24D 19/10, F24D 3/10, F16K 3/08, F16K 27/04, F16K 11/20

(54) **Ventileinheit für einen Heizkreisverteiler und Heizkreisverteiler**
Valve unit for a heating circuit distributor and heating circuit distributor
Vanne pour un collecteur de circuit de chauffage et collecteur de circuit de chauffage

(30) Priorität: 06.12.2013 DE 102013020127
(43) Veröffentlichungstag der Anmeldung: 10.06.2015
(73) Patentinhaber: Simplex Armaturen & Systeme GmbH, 88260 Argenbühl (DE)
(72) Erfinder: Benesch, Ralf, 88138 Weißensberg (DE)
(74) Vertreter: Otten, Roth, Dobler & Partner mbB Patentanwälte

(56) Entgegenhaltungen:
- EP-A1- 0 015 600
- WO-A2-94/03745
- DE-A1- 3 829 693
- DE-U1- 20 109 053

## Beschreibung

Die Erfindung betrifft eine Ventileinheit für einen Heizkreisverteiler, insbesondere eine Heizkreisverteilerventileinheit gemäß dem Oberbegriff des Anspruchs 1 sowie einen Heizkreisverteiler gemäß dem Oberbegriff des Anspruchs 6.

Aus der DE 10 2004 036 868 B4 ist ein Heizkreisverteiler mit gewindelosen Anschlussstutzen zur Aufnahme von Ventileinheiten bekannt. Der Heizkreisverteiler umfasst hierbei ein Ventilgehäuse, ein erstes Ventilteil und ein zweites Ventilteil, wobei das Ventilgehäuse einen ersten Anschlussstutzen zur Aufnahme des ersten Ventilteils und einen zweiten Anschlussstutzen zur Aufnahme des zweiten Ventilteils umfasst, wobei das erste Ventilteil und das zweite Ventilteil in einem Innenraum des Ventilgehäuses verbunden sind, wobei das erste Ventilteil ein Stellmittel umfasst, wobei das zweite Ventilteil eine Anschlussmuffe mit einem Rohrleitungsanschluss umfasst und wobei eine aus dem ersten Ventilteil und dem zweiten Ventilteil gebildete Ventileinheit einen Kanal umfasst, welcher einem Innenraum des Ventilgehäuses und den Rohrleitungsanschluss verbindet. In der DE 201 09 053 U1 wird eine Ventilvorrichtung beschrieben, einerseits bestehend aus einem Regelelement zur Herstellung eines bestimmten Widerstandsbeiwertes und andererseits bestehend aus einer davon unabhängigen Absperreinheit.

Es ist Aufgabe der Erfindung, eine Ventileinheit für einen Heizkreisverteiler bzw. einen Heizkreisverteiler dahingehend zu verbessern, dass die Ventileinheit außerhalb und innerhalb des Ventilgehäuses einen kompakten Aufbau aufweist.

Diese Aufgabe wird ausgehend von den Merkmalen des Oberbegriffs des Anspruchs 1 bzw. des Anspruch 6 durch die kennzeichnenden Merkmale des jeweiligen Anspruchs gelöst. In den jeweiligen Unteransprüchen sind vorteilhafte und zweckmäßige Weiterbildungen angegeben.

Bei der erfindungsgemäßen Ventileinheit für einen Heizkreisverteiler, welche insbesondere als Heizkreisverteilerventileinheit ausgebildet ist, umfasst die Ventileinheit in dem Kanal eine drehfest gelagerte erste Scheibe mit wenigstens einer Durchströmöffnung und eine mit der ersten Scheibe in flächigem Kontakt stehende zweite Scheibe mit wenigstens einer weiteren Durchströmöffnung, wobei die zweite Scheibe derart mit dem Stellmittel verbunden ist, dass die zweite Scheibe die wenigstens eine Durchströmöffnung der ersten Scheibe in einer ersten Stellung des Stellmittels verschließt und dass die zweite Scheibe die Durchströmöffnung der ersten Scheibe in wenigstens einer weiteren Stellung des Stellmittels unter Vermeidung einer Axialverschiebung der ersten und zweiten Scheibe wenigstens teilweise freigibt. Weiterhin ist es vorgesehen, die Anschlussmuffe des zweiten Ventilteils mit einem Führungskanal auszustatten, wobei die zweite Scheibe in dem Führungskanal verdrehbar um eine Längsachse des Führungskanals zwischen der ersten Scheibe und einem Konterring gelagert ist. Hierdurch kann auf ein gesondertes, die Scheiben und den Konterring aufnehmendes Bauteil verzichtet werden, in dem der Führungskanal in herstellungstechnisch einfacher Weise als Fortsatz eines auf den zweiten Anschlussstutzen angepassten Außengewindes der Anschlussmuffe ausgebildet ist. Es ist auch vorgesehen, dem Stellmittel an einem unteren Ende eine geometrische Form zu geben, welche geeignet ist, dieses durch einen Steckvorgang in Richtung der Längsachse des Stellmittels formschlüssig mit der zweiten Scheibe zu verbinden, so dass von dem Stellmittel ein Drehmoment um die Längsachse des Führungskanal bzw. die Längsachse des Stellmittels auf die zweite Scheibe übertragbar ist. Hierdurch beschränkt sich der Zusammenbau des ersten Ventilteils und des zweiten Ventilteils auf einen reinen Steckvorgang, so dass es möglich ist, das erste Ventilteil und das zweite Ventilteil unabhängig voneinander an dem Ventilgehäuse zu montieren bzw. zu verschrauben. Weiterhin ist es auch vorgesehen, die geometrische Form des unteren Endes des Stellmittels derart anzupassen, dass dieses im fertig montierten Zustand des Ventils derart formschlüssig in dem Konterring gelagert ist, dass eine Drehbarkeit des Stellmittels um die Längsachse des Führungskanals begrenzt ist, wobei die Drehbarkeit insbesondere auf 90° begrenzt ist, wobei das Stellmittel hierzu insbesondere wenigstens einen radialen Vorsprung aufweist und wobei der Konterring hierzu insbesondere wenigstens einen axialen Vorsprung aufweist. Hierdurch ist die erste Stellung des Stellmittels, nämlich die Stellung "vollständig geschlossen", durch einen ersten Anschlag definiert und hierdurch ist auch eine der weiteren Stellungen des Stellmittels, nämlich insbesondere die Stellung "vollständig geöffnet", durch einen zweiten Anschlag definiert. Das zweite Ventilteil umfasst ein Distanzstück, wobei das Distanzstück in dem Führungskanal gelagert ist und wobei sich die erste Scheibe in Richtung der Längsachse des Führungskanals auf dem Distanzstück gegen eine von dem Stellmittel über die zweite Scheibe auf die erste Scheibe übertragene Druckkraft abstützt. Durch die Verwendung des Distanzstücks ist es mit minimalem Aufwand, nämlich dem ausschließlichen Austausch eines Distanzstücks einer ersten Höhe gegen ein Distanzstück einer zweiten Höhe möglich, das erste und das zweite Ventilteil auf ein erstes Ventilgehäuse mit einem ersten Abstand zwischen den Anschlussstutzen und auf ein zweites Ventilgehäuse mit einem zweiten Abstand zwischen den Anschlussstutzen anzupassen, wobei sich die beiden Anschlussstutzenabstände unterscheiden.

Durch eine derartige, auf einer ausschließlichen Drehbewegung des Stellmittels beruhenden Ventilfunktion, welche frei von einer axialen Bewegung von Ventilteilen entlang einer Längsachse des Stellmittels ist, ist ein kompakter Aufbau der Ventileinheit gewährleistet, da im Wesentlichen lediglich zwei flach bauende Scheiben und ein in seiner Funktion auf eine reine Drehbewegung um die eigene Längsachse reduziertes Stellmittel verbaut werden müssen. Somit ist für die Ventileinheit innerhalb und außerhalb des Ventilgehäuses in Richtung der Längsachse des Stellmittels nur wenig Bauraum erforderlich.

Hinsichtlich der ersten Scheibe und des Konterrings ist es vorgesehen, diese in dem Führungskanal in Bezug auf die Längsachse des Führungskanals drehfest zu lagern, wobei diese in dem Führungskanal insbesondere formschlüssig gehalten sind, wobei der Formschluss insbesondere derart ausgebildet ist, dass die erste Scheibe und/oder der Konterring in Richtung der Längsachse des Führungskanals in diesen einschiebbar und um die Längsachse unverdrehbar an dem Führungskanal gehalten sind. Eine derartige Verdrehsicherung ist fertigungstechnisch einfach an dem Führungskanal herstellbar.

Es ist auch vorgesehen, das Stellmittel mit einen Kragen zu versehen und in einer Stellmittelführung einer Anschlussmuffe des ersten Ventilteils derart gefedert zu lagern, dass eine Stellmittelfeder, welche sich in der Anschlussmuffe abstützt, das Stellmittel in axialer Richtung in Richtung des zweiten Ventilteils schiebt. Hierdurch ist die Druckkraft, mit welcher das Stellmittel auf die zweite Scheibe wirkt im Wesentlichen durch die Druckkraft der Stellmittelfeder bestimmt und im wesentlichen unabhängig von einer Einschraubtiefe, mit welcher die Anschlussmuffe des ersten Ventilteils in den ersten Anschlussstutzen und/oder die Anschlussmuff des zweiten Ventilteils in den zweiten Anschlussstutzen eingeschraubt ist. Somit ist die Ventileinheit im montierten Zustand in ihrer Funktion insbesondere auch gegenüber Fertigungstoleranzen des Ventilgehäuses unempfindlich oder gegenüber der Verwendung unterschiedlich dicker und/oder komprimierbarer Dichtungen zwischen Anschlussstutzen und Anschlussmuffe unempfindlich.

Weiterhin ist das Stellmittel als Stift ausgebildet ist. Ein derartiges Bauteil ist kostengünstig herstellbar.

Es ist auch vorgesehen die erste Scheibe und/oder den Konterring an einer Mantelfläche mit wenigsten einer Nase auszustatten und den Führungskanal der Anschlussmuffe des zweiten Ventilteils mit wenigstens einer auf die Nase bzw. die Nasen angepassten Führungsnut bzw. Führungsnuten auszustatten, derart, dass diese in Richtung der Längsachse des Führungskanals geführt sind und an einer Rotation um diese Längsachse gehindert sind. Hierdurch ist die Montage der ersten Scheibe und des Konterrings ebenso einfach wie die Montage des Distanzstücks und der zweiten Scheibe durch einfaches Einschieben in den Führungskanal der Anschlussmuffe des zweiten Ventilteils möglich.

Bei dem erfindungsgemäßen Heizkreisverteiler ist es vorgesehen, die wenigstens eine Ventileinheit entsprechend wenigstens einem der vorhergehenden Ansprüche auszubilden. Hierdurch wird ein Heizkreisverteiler gebildet, welcher die jeweils oben genannten Vorteile aufweist.

Weiterhin ist es vorgesehen bei dem Heizkreisverteiler, den ersten Anschlussstutzen des Ventilgehäuses und die Anschlussmuffe des ersten Ventilteils mit miteinander korrespondierenden Gewinden zu versehen und die Anschlussmuffe unter Zwischenlage einer Dichtung in den Anschlussstutzen des Ventilgehäuses einzuschrauben und/oder den zweiten Anschlussstutzen des Ventilgehäuses und die Anschlussmuffe des zweiten Ventilteils mit miteinander korrespondierenden Gewinden zu versehen und die Anschlussmuffe unter Zwischenlage einer Dichtung in den Anschlussstutzen des Ventilgehäuses einzuschrauben. Derartige Verbindungen sind einfach herstellbar und ohne Demontage durch die außen liegenden Dichtungen hinsichtlich ihrer Funktion kontrollierbar.

Im Sinne der Erfindung ist unter dem ersten, oberen Ventilteil eine erste Baugruppe der Ventileinheit zu verstehen. Im Sinne der Erfindung ist unter dem zweiten, unteren Ventilteil eine zweite Baugruppe der Ventileinheit zu verstehen. Hierbei bilden die beiden Baugruppen die Ventileinheit. Hierbei bilden ein Ventilgehäuse und wenigstens eine Ventileinheit den Heizkreisverteiler. Hierbei sind die beiden Baugruppen zur Montage der Ventileinheit an dem Ventilgehäuse vormontiert und lassen sich jeweils als ein Bauteil handhaben.

Weitere Einzelheiten der Erfindung werden in der Zeichnung anhand von schematisch dargestellten Ausführungsbeispielen beschreiben.

Hierbei zeigt:
- Figur 1:: eine Explosionsdarstellung einer erfindungsgemäßen Ventileinheit und ein Ventilgehäuse bzw. eine Explosionsdarstellung eines Heizkreisverteilers;
- Figur 2:: eine Explosionsdarstellung der Bauteile des zweiten, unteren Ventilteils mit einem Ausschnitt des Ventilgehäuses;
- Figur 3:: eine Explosionsdarstellung der Bauteile des ersten, oberen Ventilteils mit einem Ausschnitt des Ventilgehäuses;
- Figur 4:: eine Explosionsdarstellung eines unteren Endes des Stellmittels, des Konterrings, der zweiten Scheibe, der ersten Scheibe und des Distanzstücks,
- Figur 5:: einen zweiten Heizkreisverteiler, bei welchem ein Ventilgehäuse zum Einbau von zwei Ventileinheiten vorgesehen ist;
- Figur 6:: eine perspektivische und geschnittene Ansicht des in der Figur 1 bis 4 gezeigten Heizkreisverteilers im zusammengebauten Zustand und
- Figur 7:: einen Ausschnitt aus der Figur 4 in weiter vergrößerter Darstellung.

### Weiter auf der ursprünglichen Seite 7

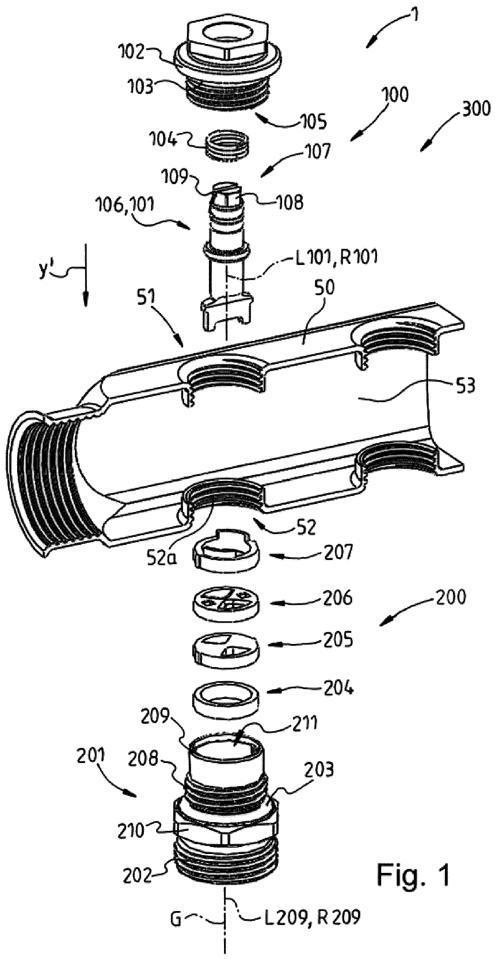

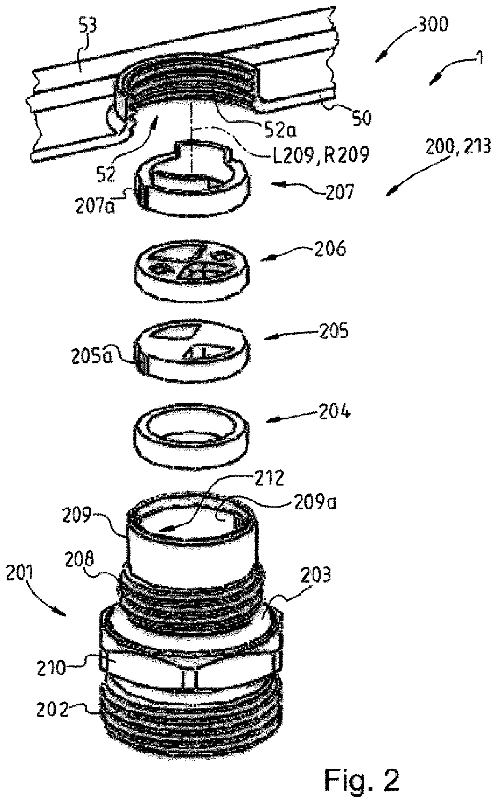

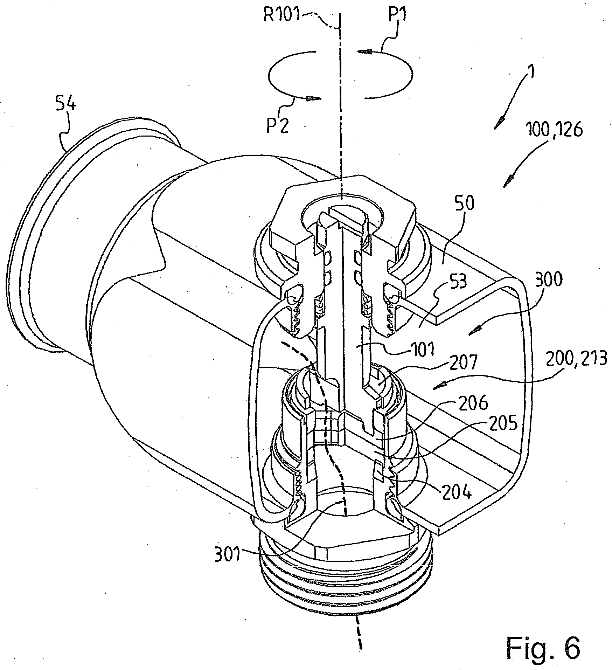

In der Figur 1 ist eine Explosionsdarstellung eines erfindungsgemäßen Heizkreisverteilers 1 bzw. einer erfindungsgemäßen Ventileinheit 300 gezeigt. Die Figuren 2, 3, 4 und 7 zeigen jeweils in vergrößerter Ansicht Details der Explosionsdarstellung der Figur 1 und die Figur 6 zeigt den Heizkreisverteiler 1 bzw. die Ventileinheit 300 im zusammengebauten Zustand.

Der Heizkreisverteiler 1 umfasst ein Ventilgehäuse 50, ein erstes, oberes Ventilteil 100 und ein zweites, unteres Ventilteil 200. Hierbei umfasst das Ventilgehäuse 50 einen ersten Anschlussstutzen 51 zur Aufnahme des ersten Ventilteils 100 und einen zweiten Anschlussstutzen 52 zur Aufnahme des zweiten Ventilteils 200. Das erste Ventilteil 100 und das zweite Ventilteil 200 sind im fertig montierten Zustand in einem Innenraum 53 des Ventilgehäuses 50 verbunden sind. Das erste Ventilteil 100 umfasst ein Stellmittel 101 und das zweite Ventilteil 200 umfasst eine Anschlussmuffe 201 mit einem Rohrleitungsanschluss 202. die aus dem ersten Ventilteil 100 und dem zweiten Ventilteil 200 gebildete Ventileinheit 300 umfasst einen Kanal 301 (siehe Figur 6). Dieser verbindet den Innenraum 53 des Ventilgehäuses 50 und den Rohrleitungsanschluss 202.

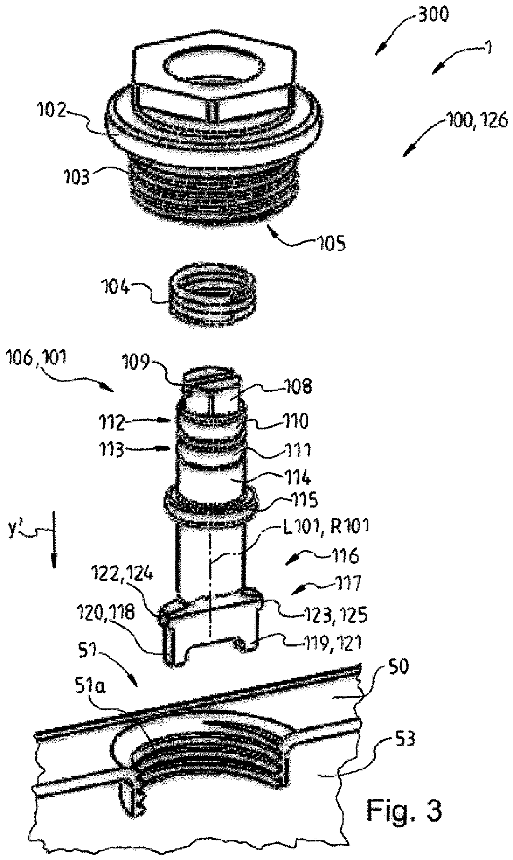

Das erste Ventilteil 100 (siehe insbesondere Figuren 1 und 3) der Ventileinheit 300 umfasst neben dem Stellmittel 101, eine Anschlussmuffe 102, eine Dichtung 103 zur Abdichtung der Anschlussmuffe 102 gegen das Ventilgehäuse 50 und eine Stellmittelfeder 104, welche in einer Stellmittelführung 105 der Anschlussmuffe 102 aufgenommen ist. Das Stellmittel 101 ist als Stift 106 stiftförmig ausgebildet und weist eine Längsachse L101 auf, welche gleichzeitig eine Rotationsachse R101 bildet, um welche das Stellmittel 101 drehbar ist, wenn dieses in der Stellmittelführung 105 der Anschlussmuffe 102 geführt ist. Das Stellmittel 101 selbst umfasst ein oberes Ende 107, welches einen Außensechskant 108 und einen Schlitz 109 zur Betätigung des Stellmittels 101 mit einem Werkzeug aufweist. Weiterhin umfasst das Stellmittel 101 zwei ringförmige Dichtungen 110 und 111, welche in ringförmigen Nuten 112, 113 eines Grundkörpers 114 des Stellmittels 101 aufgenommen sind und im montierten Zustand eine Abdichtung zwischen dem Stellmittel 101 und der Anschlussmuffe 102 herbeiführen. Weiterhin ist an dem Grundkörper 114 des Stellmittels 101 ein Kragen 115 ausgebildet, an welchem im montierten Zustand die Stellmittelfeder 104 anliegt und sich dann auch gegen die Anschlussmuffe 102 abstützt und das Stellmittel 101 in eine Pfeilrichtung y' in Richtung des zweiten Ventilteils 200 drückt. An einem unteren Ende 116 des Stellmittels 101 ist dieses als Schlüssel 117 ausgebildet. Hierbei umfasst der Schlüssel 117 zwei axial in Richtung der Längsachse L101 weisende Axialnasen 118, 119, welche axiale Vorsprünge 120, 121 bilden, und zwei diametral gegenüber liegende, quer zu der Längsachse L101 orientierte radial nach außen weisende Radialnasen 122, 123, auf, welche radiale Vorsprünge 124, 125 bilden. In der Figur 6 ist das erste Ventilteil 100, welches eine erste Baugruppe 126 bildet vollständig zusammengebaut und mit der Anschlussmuffe 102 in ein Gewinde 51a des Anschlussstutzens 51 eingeschraubt dargestellt. In dieser Darstellung ist mit zwei Pfeilen P1 und P2 symbolisiert wie das Stellmittel 101 z.B. mit einem nicht dargestellten Schraubendreher um 90° nach rechts und nach links um seine Rotationsachse R101 in der Stellmittelführung 105 der Anschlussmuffe 102 verdrehbar ist und hierbei von der Stellmittelfeder 104 in Richtung des zweiten Ventilteils 200 gedrückt wird.

Das zweite Ventilteil 200 (siehe insbesondere Figuren 1, 2, 4 und 7) der Ventileinheit 300 umfasst neben der Anschlussmuffe 201 eine Dichtung 203 für die Anschlussmuffe 201, ein Distanzstück 204, eine erste Scheibe 205, eine zweite Scheibe 206 und einen Konterring 207. Die Anschlussmuffe 201 umfasst neben dem Rohrleitungsanschluss 202 ein weiteres Außengewinde 208, welches auf ein Gewinde 52a des zweiten Anschlussstutzens 52 des Ventilgehäuses 50 angepasst ist. Das Außengewinde 208 bildet auch einen Abschnitt eines Führungskanals 209. Der Führungskanal 209 weist eine Längsachse L209 auf, welche im fertig montierten Zustand der Ventileinheit 300 auf einer Geraden G mit der Längsachse L101 des Stellmittels 101 liegt. Der Führungskanal 209 verjüngt sich im Bereich eines Außensechskants 210 der Anschlussmuffe 201 derart, dass das Distanzstück 204, welches als Distanzhülse ausgebildet ist, in die Pfeilrichtung y' in Richtung der Längsachse L209 nur begrenzt in den Führungskanal 209 eingeschoben werden kann und an einem Durchrutschen in Richtung des Rohrleitungsanschlusses 202 gehindert ist. Entsprechend wird die erste Scheibe 205 beim Einschieben in den Führungskanal 209 durch das Distanzstück 204 aufgehalten. Entsprechend wird die zweite Scheibe 206 beim Einschieben in den Führungskanal 209 durch die erste Scheibe 205 aufgehalten und entsprechend wird schließlich der Konterring 207 beim Einschieben in den Führungskanal 209 durch die zweite Scheibe 206 zurückgehalten, so dass sich der Konterring 207 über die zweite Scheibe 206, die erste Scheibe 205 und das Distanzstück 204 an einem in dem Führungskanal 209 ausgebildeten Absatz 211 abstützt. Für das Distanzstück 204 und die zweite Scheibe 206 bildet die Längsachse L209 auch eine Rotationsachse R209, um welche diese beiden Bauteile gegenüber dem Führungskanal 209 bzw. gegenüber der Anschlussmuffe 201 drehbar sind. Die erste Scheibe 205 und der Konterring 207 weisen als Formschlussmittel jeweils eine Nase 205a und 207a auf. Zur Aufnahme dieser Nasen 205a und 207a ist an einem Innenmantel 209a des Führungskanals 209 als Führungsmittel eine in Richtung der Längsachse L209 verlaufende Führungsnut 212 ausgebildet bzw. eingefräst. Insgesamt ist der Führungskanal 209 derart auf die erste Scheibe 205 und den Konterring 207 angepasst, dass diese beiden Bauteile nur bei Ausrichtung ihrer Nasen 205a und 207a in Richtung der Längsachse L209 in den Führungskanal 209 einschiebbar sind und in diesem dann unverdrehbar um die Rotationsachse R209 gehalten sind.

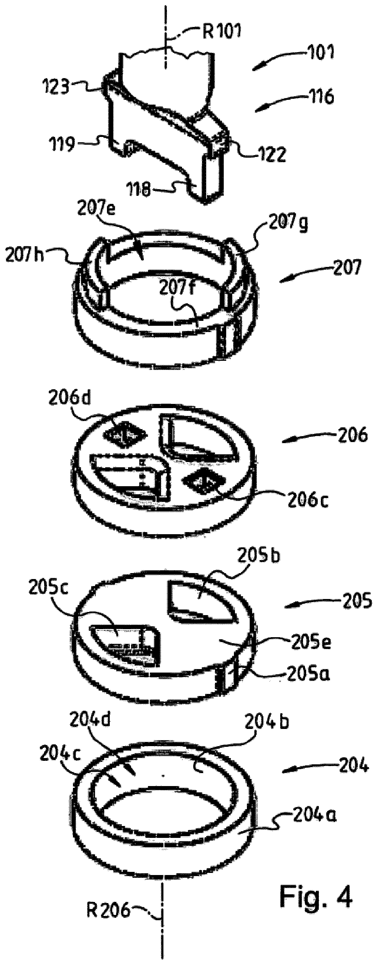

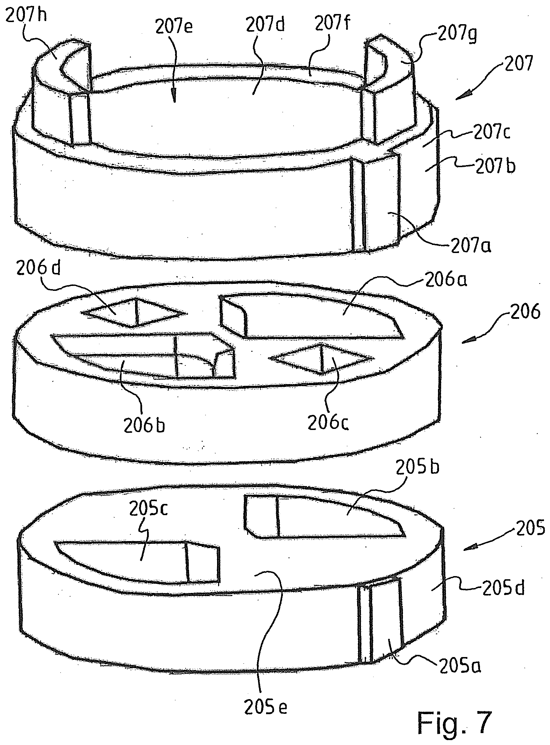

Das Distanzstück 204 ist als Kreisringscheibe ausgebildet (siehe insbesondere Figuren 4 und 7), welche mit einer äußeren Mantelfläche 204a an dem Innenmantel 209a des Führungskanals 209 (siehe Figur 2) anliegt. Eine von einer inneren Mantelfläche 204b des Distanzstücks 204 begrenzte Öffnung 204c dient als Kanalabschnitt 204d, welcher von einem nicht dargestellten Warmwasserstrom durchströmbar ist.

Die unverdrehbar auf dem Distanzstück 204 liegende erste Scheibe 205 umfasst eine erste Durchströmöffnung 205b und eine zweite Durchströmöffnung 205c. Hierbei sind die beiden Durchströmöffnungen 205b und 205c auf die Öffnung 204c des Distanzstücks 204 so ausgerichtet, dass die Durchströmöffnungen 205b und 205c jeweils mit ihrer vollen Querschnittsfläche in die Öffnung 204c münden. Die erste Scheibe 205 liegt mit einer äußeren Mantelfläche 205d an dem Innenmantel 209a des Führungskanals 209a an.

Die verdrehbar auf der ersten Scheibe 205 liegende zweite Scheibe 206 ist als Steuerscheibe ausgebildet. Die zweite Scheibe 206 umfasst zwei sich gegenüber liegende Durchströmöffnungen 206a und 206b bzw. Steuerkanäle sowie zwei sich zwischen den Durchströmöffnungen 206a und 206b gegenüber liegende Aufnahmetaschen 206c und 206d. Abhängig von einer Drehstellung, in welcher sich die zweite Scheibe 206 als Steuerscheibe befindet, sind die Durchströmöffnungen 206a und 206b durch eine Stirnfläche 205e die erste Scheibe 205 vollständig geschlossen oder sind die Durchströmöffnungen 206a und 206b durch die erste Scheibe 205 nur teilweise geschlossen und damit teilweise auf die Durchströmöffnungen 205b und 205c der ersten Scheibe 205 ausgerichtet oder sind die Durchströmöffnungen 206a und 206b vollständig, mit ihrem ganzen Querschnitt auf die Durchströmöffnungen 205b und 205c der ersten Scheibe 205 ausgerichtet und damit für einen Wasserstrom vollständig geöffnet. Hierbei erfolgt eine Drehbetätigung der zweiten Scheibe 206 durch das Stellmittel 101, welches mit seinen Axialnasen 118, 119 in die Aufnahmetaschen 206c und 206d der zweiten Scheibe 206 greift, so dass eine Drehung des Stellmittels 101 um dessen Rotationsachse R101 zu einer Drehung der zweiten Scheibe 206 um die Rotationsachse R209 des Führungskanals 209 in dem Führungskanal 209 führt.

Auf der zweiten Scheibe 206 liegt als weiteres Bauteil einer durch das zweite Ventilteil 200 gebildeten zweiten Baugruppe 213 der Konterring 207 auf, welcher ebenso wie die erste Scheibe 205 drehfest in dem Führungskanal 209 gehalten ist. Der Konterring 207 umfasst einen Kreisring 207b und die Nase 207a, wobei die Nase 207a an einer äußerer Mantelfläche 207c des Kreisrings 207b angeordnet ist. Eine innere Mantelfläche 207d des Kreisrings 207b begrenzt eine Öffnung 207e, welche von dem Wasserstrom durchströmbar ist. An einer oberen Stirnseite 207f, welche von der zweiten Scheibe 206 abgewandt ist, umfasst der Konterring 207 zwei sich gegenüber liegende, axiale Vorsprünge 207g und 207h.

Hierbei wirkt der Konterring 207 im zusammengebauten Zustand des Ventils 1 (siehe auch Explosionsansicht der Figur 4) derart mit dem Stellmittel 101 zusammen, dass das durch die Stellmittelfeder 104 in Pfeilrichtung y' gedrückte Stellmittel 101 durch die Öffnung 207e des Konterrings 207 hindurch mit seinen Axialnasen 118, 119 in die Taschen 206c und 206d der zweiten Scheibe 206 greift und die zweite Scheibe 206 auf die Stirnfläche 205e der ersten Scheibe 205 drückt, wobei sich die erste Scheibe 205 wiederum auf dem Distanzstück 204 abstützt, welches an der Anschlussmuffe 201 anliegt. Hierbei liegen die Radialnasen 122, 123 des unteren Endes 116 des Stellmittels 101 zwischen den axialen Vorsprünge 207g und 207h des Konterrings 207 der Stirnseite 207f gegenüber, so dass eine Verdrehbarkeit des Stellmittels 101 um seine Rotationsachse R101 durch die axialen Vorsprünge 207g und 207h auf 180° begrenzt ist.

In der aufgeschnittenen Zusammenbaudarstellung des Heizkreisverteilers 1 in der Figur 6 ist der Kanal 301 mit einer gestrichtelten Linie angedeutet, wobei die zweite Scheibe 206 gegenüber der ersten Scheibe 205 mit Hilfe des Stellmittels 101 so verdreht ist, dass die Durchströmöffnungen 206a, 206b der zweiten Scheibe 206 deckungsgleich mit den Durchströmöffnungen 205b, 205c der ersten Scheibe 205 liegen und so die Ventileinheit 300 maximal geöffnet ist. Zur Erhaltung der Übersichtlichkeit der Darstellung sind geschnittene Flächen in der Figur 6 ohne Schraffuren dargestellt. Das Ventilgehäuse 50 umfasst auch wenigstens einen Zu- bzw. Ableitungsanschluss 54.

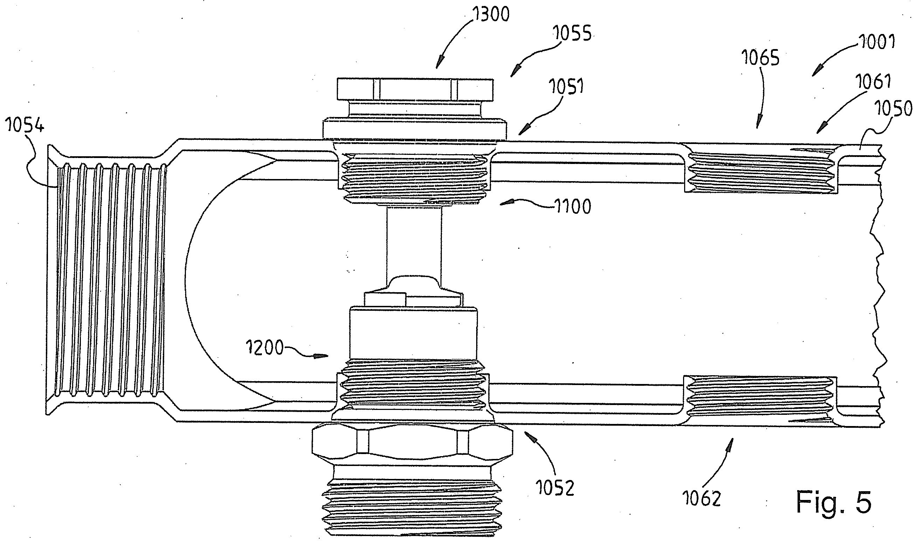

In der Figur 5 ist in geschnittener Seitenansicht ein Ausschnitt eines Heizkreisverteilers 1001 gezeigt, welcher ein Ventilgehäuse 1050 mit einem ersten Anschlussstutzen 1051 und einem zweiten Anschlussstutzen sowie einem dritten Anschlussstutzen 1061 und einem vierten Anschlussstutzen 1062 umfasst, wobei die Anschlussstutzen 1051, 1052 und die Anschlussstutzen 1061 und 1062 jeweils ein Anschlussstutzenpaar 1055 und 1065 bilden. Die Anschlussstutzenpaare 1055 und 1065 sind jeweils zur Montage einer Ventileinheit 1300 vorgesehen, welche sich jeweils aus einem ersten Ventilteil 1100 und einem zweiten Ventilteil 1200 zusammensetzt. Hierbei ist in der Figur 5 exemplarisch mit der Ventileinheit 1300, welche an dem ersten Anschlussstutzenpaar 1055 montiert ist, nur eine der beiden Ventileinheiten gezeigt. Die beiden Ventileinheiten sind identisch zu der in den Figuren 1 bis 4, 6 und 7 gezeigten und beschriebenen Ventileinheit aufgebaut und montiert. Insofern wird ausdrücklich auf die entsprechende Beschreibung verwiesen. Weiterhin umfasst das Gehäuse einen Zu- bzw. Ableitungsanschluss 1054.

### Bezugszeichenliste:

- 1: Heizkreisverteiler

- 50: Ventilgehäuse
- 51: erster Anschlussstutzen
- 51a: Gewinde
- 52: zweiter Anschlussstutzen
- 52a: Gewinde
- 53: Innenraum
- 54: Zu- bzw. Ableitungsanschluss

- 100: erstes, oberes Ventilteil
- 101: Stellmittel
- 102: Anschlussmuffe
- 103: Dichtung
- 104: Stellmittelfeder
- 105: Stellmittelführung
- 106: Stift
- 107: oberes Ende
- 108: Außensechskant an 101
- 109: Schlitz an 101
- 110, 111: ringförmige Dichtung
- 112: ringförmige Nut,
- 114: Grundkörper
- 115: Kragen
- 116: unteres Ende von 101
- 117: Schlüssel
- 118, 119: Axialnase
- 120, 121: axialer Vorsprung
- 122, 123: Radialnase
- 124, 125: radialer Vorsprung
- 126: erste Baugruppe

- 200: zweites, unteres Ventilteil
- 201: Anschlussmuffe
- 202: Rohrleitungsanschluss
- 203: Dichtung
- 204: Distanzstück
- 204a: äußere Mantelfläche
- 204b: innere Mantelfläche
- 204c: Öffnung
- 204d: Kanalabschnitt
- 205: erste Scheibe
- 205a: Nase
- 205b: Durchströmöffnung
- 205c: Durchströmöffnung
- 205d: äußere Mantelfläche
- 205e: Stirnfläche
- 206: zweite Scheibe bzw. Steuerscheibe
- 206a, 206b: Durchströmöffnung bzw. Steuerkanal
- 206c, 206d: Aufnahmetasche
- 207: Konterring
- 207a: Nase
- 207b: Kreisring
- 207c: äußere Mantelfläche
- 207d: innere Mantelfläche
- 207e: Öffnung
- 207f: obere Stirnseite
- 207g, 207h: axialer Vorsprung
- 208: Außengewinde
- 209: Führungskanal
- 209a: Innenmantel
- 211: Absatz in 209
- 212: Führungsnut
- 213: zweite Baugruppe

- 300: Ventileinheit
- 301: Kanal

- G: Gerade
- L101: Längsachse
- L209: Längsachse
- P1, P2: Pfeil
- R101: Rotationsachse
- R209: Rotationsachse
- y': Pfeilrichtung
- 1001: Heizkreisverteiler
- 1050: Ventilgehäuse
- 1051, 1052: 1. und 2. Anschlussstutzen
- 1054: Zu- oder Ableitungsanschluss
- 1055: 1. Anschlussstutzenpaar
- 1061, 1062: 3. und 4. Anschlussstutzen
- 1065: 2. Anschlussstutzenpaar
- 1100: erstes Ventilteil
- 1200: zweites Ventilteil
- 1300: Ventileinheit

## Patentansprüche

1. Ventileinheit (300; 1300) für einen Heizkreisverteiler (1; 1001), insbesondere Heizkreisverteilerventileinheit, welche in ein Ventilgehäuse (50; 1050) einbaubar ist, umfassend
- ein erstes Ventilteil (100; 1100) und ein zweites Ventilteil (200; 1200),
- wobei das erste Ventilteil (100; 1100) an einen ersten Anschlussstutzen (51; 1051; 1061) des Ventilgehäuses (50; 1050) anschließbar ist und wobei das zweite Ventilteil (200; 1200)an einen zweiten Anschlussstutzen (52; 1052; 1062) des Ventilgehäuses (50; 1050) anschließbar ist,
- wobei das erste Ventilteil (100; 1100) und das zweite Ventilteil (200; 1200) in einem Innenraum (53) des Ventilgehäuses (50; 1050) verbindbar sind,
- wobei das erste Ventilteil (100; 1100) ein Stellmittel (101) umfasst,
- wobei das zweite Ventilteil (200; 1200) eine Anschlussmuffe (201) mit einem Rohrleitungsanschluss (202) umfasst,
- wobei die aus dem ersten Ventilteil (100; 1100) und dem zweiten Ventilteil (200; 1200) gebildete Ventileinheit (300; 1300) einen Kanal (301) umfasst, durch welchen der Innenraum (53) des Ventilgehäuses (50; 1050) mit dem Rohrleitungsanschluss (202) verbindbar ist,
- wobei die Ventileinheit (300; 1300) in dem Kanal (301) eine drehfest gelagerte erste Scheibe (205) mit wenigstens einer Durchströmöffnung (205b, 205c) und eine mit der ersten Scheibe (205) in flächigem Kontakt stehende zweite Scheibe (206) mit wenigstens einer weiteren Durchströmöffnung (206a, 206b) umfasst,
- wobei die zweite Scheibe (206) derart mit dem Stellmittel (101) verbunden ist, dass die zweite Scheibe (206) die wenigstens eine Durchströmöffnung (205b, 205c) der ersten Scheibe (205) in einer ersten Drehstellung des Stellmittels (101) verschließt und dass die zweite Scheibe (206) die Durchströmöffnung (205b, 205c) der ersten Scheibe (205) in wenigstens einer weiteren Drehstellung des Stellmittels (101) wenigstens teilweise freigibt,
**dadurch gekennzeichnet, dass**
- die Anschlussmuffe (201) des zweiten Ventilteils (200; 1200) einen Führungskanal (209) umfasst, wobei die zweite Scheibe (206) in dem Führungskanal (209) verdrehbar um eine Längsachse (L209) des Führungskanals (209) zwischen der ersten Scheibe (205) und einem Konterring (207) gelagert ist,
- das Stellmittel (101) an einem unteren Ende (116) derart ausgebildet ist, dass dieses durch einen Steckvorgang derart formschlüssig mit der zweiten Scheibe (206) verbindbar ist, dass von dem Stellmittel (101) ein Drehmoment um die Längsachse (L209) des Führungskanal (209) auf die zweite Scheibe (206) übertragbar ist,
- das Stellmittel (101) an einem unteren Ende (116) derart ausgebildet ist, dass dieses im fertig montierten Zustand der Ventileinheit (300; 1300) derart formschlüssig in dem Konterring (207) gelagert ist, dass eine Drehbarkeit des Stellmittels (101) um die Längsachse (L209) des Führungskanals (209) begrenzt ist, wobei die Drehbarkeit insbesondere auf 90° begrenzt ist, wobei das Stellmittel (101) hierzu insbesondere wenigstens einen radialen Vorsprung (124, 125) aufweist und wobei der Konterring (207) hierzu insbesondere wenigstens einen axialen Vorsprung (207g, 207h) aufweist und
- das zweite Ventilteil (200; 1200) ein Distanzstück (204) umfasst, wobei das Distanzstück (204) in dem Führungskanal (209) gelagert ist und wobei sich die erste Scheibe (205) in Richtung der Längsachse (L209) des Führungskanals (209) auf dem Distanzstück (204) gegen eine von dem Stellmittel (101) über die zweite Scheibe(206) auf die erste Scheibe (205) übertragene Druckkraft abstützt.

2. Ventileinheit nach Anspruch 1, **dadurch gekennzeichnet, dass** die erste Scheibe (205) und der Konterring (207) in dem Führungskanal (209) in Bezug auf die Längsachse (L209) des Führungskanals (209) drehfest gelagert sind, wobei diese zu dem Führungskanal (209) insbesondere einen Formschluss aufweisen, welcher insbesondere derart ausgebildet ist, dass die erste Scheibe (205) und/oder der Konterring (207) in Richtung der Längsachse (L209) des Führungskanals (209) in diesen einschiebbar sind.

3. Ventileinheit nach einem der vorhergehenden Ansprüche, **dadurch gekennzeichnet, dass** das Stellmittel (101) einen Kragen (115) umfasst und in einer Stellmittelführung (105) einer Anschlussmuffe (102) des ersten Ventilteils (100; 1100) derart gefedert gelagert ist, dass eine Stellmittelfeder (104) das Stellmittel (101) in axialer Richtung in Richtung des zweiten Ventilteils (200; 1200) schiebt.

4. Ventileinheit nach einem der vorhergehenden Ansprüche, **dadurch gekennzeichnet, dass** das Stellmittel (101) als Stift (106) ausgebildet ist.

5. Ventileinheit nach einem der vorhergehenden Ansprüche, **dadurch gekennzeichnet, dass** die erste Scheibe (205) und/oder der Konterring (207) an einer Mantelfläche (205d; 207c) wenigsten eine Nase (205a; 207a) umfassen und dass der Führungskanal (209) der Anschlussmuffe (201) des zweiten Ventilteils (200; 1200) wenigstens eine auf die Nase (205a; 207a) bzw. die Nasen (205a; 207a) angepasste Führungsnut (212) bzw. Fühurngsnuten (212) umfassen, um diese in Richtung der Längsachse (L209) des Führungskanals (209) zu führen und an einer Rotation um diese Längsachse (L209) zu hindern.

6. Heizkreisverteiler (1; 1001)) umfassend ein Ventilgehäuse (50; 1050) und wenigstens eine Ventileinheit (300; 1300), wobei das Ventilgehäuse (50; 1050) wenigstens ein Anschlussstutzenpaar (1055; 1065) und wenigstens einen Zu- bzw. Ableitungsanschluss (54; 1054) umfasst, **dadurch gekennzeichnet, dass** die Ventileinheit (300; 1300) entsprechend wenigstens einem der vorhergehenden Ansprüche ausgebildet ist.

7. Heizkreisverteiler nach Anspruch 6, **dadurch gekennzeichnet, dass** der erste Anschlussstutzen (51; 1051; 1061) des Ventilgehäuses (50; 1050) und die Anschlussmuffe (102) des ersten Ventilteils (100; 1100) miteinander korrespondierende Gewinde aufweisen, wobei die Anschlussmuffe (102) unter Zwischenlage einer Dichtung (103) in den Anschlussstutzen (51; 1051; 1061) des Ventilgehäuses (50; 1050) eingeschraubt ist.

8. Heizkreisverteiler nach Anspruch 6 oder 7, **dadurch gekennzeichnet, dass** der zweite Anschlussstutzen (52; 1052; 1062) des Ventilgehäuses (50; 1050) und die Anschlussmuffe (201) des zweiten Ventilteils (200; 1200) miteinander korrespondierende Gewinde aufweisen, wobei die Anschlussmuffe (201) unter Zwischenlage einer Dichtung (203) in den Anschlussstutzen (52; 1052; 1062) des Ventilgehäuses (50; 1050) eingeschraubt ist.

## Claims

1. A valve unit (300; 1300) for a heat circuit manifold (1; 1001), in particular a heating circuit manifold valve unit, which can be installed in a valve housing (50, 1050), comprising
- a first valve part (100; 1100) and a second valve part (200; 1200),
- wherein the first valve part (100; 1100) can be connected to a first connecting piece (51; 1051; 1061) of the valve housing (50; 1050) and wherein the second valve part (200; 1200) can be connected to a second connecting piece (52; 1052; 1062) of the valve housing (50; 1050),
- wherein the first valve part (100; 1100) and the second valve part (200; 1200) are connectable in an interior space (53) of the valve housing (50; 1050),
- wherein the first valve part (100; 1100) comprises an adjusting means (101),
- wherein the second valve part (200; 1200) comprises a connection sleeve (201) with a pipe connection (202),
- wherein the valve unit (300; 1300) formed from the first valve part (100; 1100) and the second valve part (200; 1200) comprises a channel (301), through which the interior space (53) of the valve housing (50; 1050) is connectable with the pipe connection (202),
- wherein the valve part (300; 1300) in the channel (301) comprises a first disc (205) mounted torque-proof with at least one flow-through opening (205b, 205c) and a second disc in areal contact with the first disc (205) having a least one further flow-through opening (206a, 206b),
- wherein the second disc (206) is connected with the adjusting means (101) in such a way that the second disc (206) closes the at least one flow-through opening (205b, 205c) of the first disc (205) in a first turning position of the adjusting means (101) and that the second disc (206) at least partially releases the flow-through opening (205b, 205c) of the fist disc (205) in at least one further turning position of the adjusting means (101),
**characterized in that**
- the connection sleeve (201) of the second valve part (200; 1200) comprises a guide channel (209), wherein the second disc (206) is mounted in the guide channel (209) twistably about a longitudinal axis (L209) of the guide channel (209) between the first disc (205) and a lock ring (207),
- the adjusting means (101) is formed on a lower end (116) in such a manner that this is positively connectable through a plugging process with the second disc (206), in such a manner that a torque about the longitudinal axis (L209) of the guide channel (209) is transferable from the adjusting means (101) to the second disc (206),
- the adjusting means (101) is formed on a lower end (116) in such a manner that this is mounted in the completely mounted state of the valve unit (300; 1300) positively in the lock ring (207) in such a manner that a rotatability of the adjusting means (101) about the longitudinal axis (L209) of the guide channel (209) is limited, wherein the rotatability is limited in particular to 90°, wherein the adjusting means (101) has for this purpose in particular at least one radial projection (124, 125) and wherein the lock ring (207) has in particular at least one axial projection (207g, 207h) for this purpose and
- the second valve part (200; 1200) comprises a spacer (204), wherein the spacer (204) is mounted in the guide channel (209) and wherein the first disc (205) is supported in the direction of the longitudinal axis (L209) of the guide channel (209) on the spacer (204) against a compressive force transferred from the adjusting means (101) via the second disc (206) to the first disc (205).

2. A valve unit according to Claim 1, **characterized in that** the first disc (205) and the lock ring (207) are mounted in the guide channel (209) torque-proof in relation to the longitudinal axis (L209) of the guide channel (209), wherein these have in particular a positive form locking to the guide channel (209), which is formed in particular in such a manner that the first disc (205) and/or the lock ring (207) can be inserted in the direction of the longitudinal axis (L209) of the guide channel (209) into the latter.

3. A valve unit according to one of the preceding claims, **characterized in that** the adjusting means (101) comprises a collar (115) and is mounted spring-loaded in an adjusting means guide (105) of a connection sleeve (102) of the first valve part (100; 1100) in such a manner that the adjusting means spring (104) pushes the adjusting means (101) in the axial direction in the direction of the second valve part (200; 1200).

4. A valve unit according to one of the preceding claims, **characterized in that** the adjusting means (101) is designed as a pin (106).

5. A valve unit according to one of the preceding claims, **characterized in that** the first disc (205) and/or the lock ring (207) comprises at least one nose (205a; 207a) on a lateral area (205d; 207c) and that the guide channel (209) of the connection sleeve (201) of the second valve part (200; 1200) comprises at least one guide groove (212) or guide grooves (212) adapted to the nose (205a; 207a) or the noses (205a; 207a), in order to guide the latter in the direction of the longitudinal axis (L209) of the guide channel (209) and to prevent a rotation about this longitudinal axis (L209).

6. A heat circuit manifold (1, 1001) comprising a valve housing (50; 1050) and at least one valve unit (300; 1300), wherein the valve housing (50; 1050) comprises a least one connection piece pair (1055; 1065) and a least one supply line or discharge line connection (54, 1054), **characterized in that** the valve unit (300; 1300) is designed according to at least one of the preceding claims.

7. A heat circuit manifold according to Claim 6, **characterized in that** the first connection piece (51; 1051; 1061) of the valve housing (50; 1050) and the connection sleeve (102) of the first valve part (100; 1100) have threads corresponding with each other, wherein the connection sleeve (102) is screwed into the connection piece (51; 1051; 1061) of the valve housing (50; 1050) under interposition of a seal (103).

8. A heat circuit manifold according to Claim 6 or 7, **characterized in that** the second connection piece (52; 1052; 1062) of the valve housing (50; 1050) and the connection sleeve (201) of the second valve part (200; 1200) have threads corresponding with each other, wherein the connection sleeve (201) is screwed into the connection piece (52; 1052; 1062) of the valve housing (50; 1050) under interposition of a seal (203).

## Revendications

1. Unité de vanne (300 ; 1300) pour un collecteur de circuit de chauffage (1 ; 1001), plus particulièrement unité de vanne de collecteur de circuit de chauffage qui peut être intégrée dans un corps de vanne (50 ; 1050), comprenant :
- une première partie de vanne (100, 1100) et une deuxième partie de vanne (200 ; 1200),
- la première partie de vanne (100 ; 1100) pouvant être raccordée à un premier embout de raccordement (51 ; 1051 ; 1061) du corps de vanne (50; 1050) et la deuxième partie de vanne (200; 1200) pouvant être raccordée à un deuxième embout de raccordement (52 ; 1052 ; 1062) du corps de vanne (50 ; 1050),
- la première partie de vanne (100 ; 1100) et la deuxième partie de vanne (200 ; 1200) pouvant être reliées dans un espace interne (53) du corps de vanne (50 ; 1050),
- la première partie de vanne (100 ; 1100) comprenant un moyen de réglage (101),
- la deuxième partie de vanne (200, 1200) comprenant un manchon de raccordement (201) avec un raccord de canalisation (202),
- l'unité de vanne (300 ; 1300), constituée de la première partie de vanne (100 ; 1100) et de la deuxième partie de vanne (200 ; 1200), comprenant un canal (301) par l'intermédiaire duquel l'espace interne (53) du corps de vanne (50 ; 1050) peut être relié avec le raccord de canalisation (202),
- l'unité de vanne (300 ; 1300) comprenant, dans le canal (301), un premier disque (205), logé de manière non rotative, avec au moins une ouverture de passage (205b, 205c) et un deuxième disque (206), en contact surfacique avec le premier disque (205), avec au moins une autre ouverture de passage (206a, 206b),
- le deuxième disque (206) étant relié avec le moyen de réglage (101) de façon à ce que le deuxième disque (206) ferme l'au moins une ouverture de passage (205b, 205c) du premier disque (205) dans une première position de rotation du moyen de réglage (101) et en ce que le deuxième disque (206) libère au moins partiellement l'ouverture de passage (205b, 205c) du premier disque (205) dans au moins une autre position de rotation du moyen de réglage (101),
**caractérisé en ce que**
- le manchon de raccordement (201) de la deuxième partie de vanne (200 ; 1200) comprend un canal de guidage (209), le deuxième disque (206) étant logé dans le canal de guidage (209) de manière rotative autour d'un axe longitudinal (L209) du canal de guidage (209) entre le premier disque (205) et une contre-bague (207),
- le moyen de réglage (101) est disposé au niveau d'une extrémité inférieure (116) de façon à ce que celui-ci puisse être relié par complémentarité de forme par un processus d'insertion, avec le deuxième disque (206) de façon à ce qu'un couple autour de l'axe longitudinal (L209) du canal de guidage (206) puisse être transmis par le moyen de réglage (101) au deuxième disque (206),
- le moyen de réglage (101) est disposée au niveau d'une extrémité inférieure (116) de façon à ce que celui-ci soit logé, dans l'état entièrement monté de l'unité de vanne (300 ; 1300) par complémentarité de forme dans la contre-bague (207) de façon à ce qu'une possibilité de rotation du moyen de réglage (101) autour de l'axe longitudinal (L209) du canal de guidage (209) soit limitée, la possibilité de rotation étant limitée plus particulièrement à 90°, le moyen de réglage (101) comprenant pour cela plus particulièrement au moins une saillie radiale (124, 125) et la contre-bague (207) comprenant pour cela plus particulièrement au moins une saillie axiale (207g, 207h) et
- la deuxième partie de vanne (200 ; 1200) comprenant une entretoise (204), l'entretoise (204) étant logée dans le canal de guidage (209) et le premier disque (205) s'appuyant en direction de l'axe longitudinal (L209) du canal de guidage (209) sur l'entretoise (204) contre une force de pression transmise par le moyen de réglage (101) au premier disque (205) par l'intermédiaire du deuxième disque (206).

2. Unité de vanne selon la revendication 1, **caractérisée en ce que** le premier disque (205) et la contre-bague (207) sont logés de manière non rotative dans le canal de guidage (209) par rapport à l'axe longitudinal (L209) du canal de guidage (209), ceux-ci présentant plus particulièrement une complémentarité de forme avec le canal de guidage (209), qui est conçue plus particulièrement de façon à ce que le premier disque (205) et/ou la contre-bague (207) puissent être poussés en direction de l'axe longitudinal (L209) du canal de guidage (209) dans celui-ci.

3. Unité de vanne selon l'une des revendications précédentes, **caractérisée en ce que** le moyen de réglage (101) comprend un col (115) et est logé de manière élastique dans un guidage de moyen de réglage (105) d'un manchon de raccordement (102) de la première partie de vanne (100 ; 1100) de façon à ce qu'un ressort de moyen de guidage (104) pousse le moyen de réglage (101) dans la direction axiale en direction de la deuxième partie de vanne (200 ; 1200).

4. Unité de vanne selon l'une des revendications précédentes, **caractérisée en ce que** le moyen de réglage (101) est conçu comme une tige (106).

5. Unité de vanne selon l'une des revendications précédentes, **caractérisée en ce que** le premier disque (205) et/ou la contre-bague (207) comprennent, sur une surface d'enveloppe (205d, 207c), au moins un embout (205a, 207a) et **en ce que** le canal de guidage (209) du manchon de raccordement (201) de la deuxième partie de vanne (200 ; 1200) comprennent au moins une rainure de guidage (212) ou des rainures de guidage (212) adaptées à l'embout (205a ; 207a) ou aux embouts (205a ; 207a) afin de guider ceux-ci en direction de l'axe longitudinal (L209) du canal de guidage (209) et d'empêcher une rotation autour de cet axe longitudinal (L209).

6. Collecteur de circuit de chauffage (1 ; 1001) comprenant un corps de vanne (50 ; 1050) et au moins une unité de vanne (300 ; 1300), le corps de vanne (50 ; 1050) comprenant au moins une partir de manchons de raccordement (1055 ; 1065) et au moins un raccord d'entrée et de sortie (54 ; 1054), **caractérisé en ce que** l'unité de vanne (300 ; 1300) est conçue selon au moins l'une des revendications précédentes.

7. Collecteur de circuit de chauffage selon la revendication 6, **caractérisé en ce que** le premier embout de raccordement (51 ; 1051 ; 1061) du corps de vanne (50 ; 1050) et le manchon de raccordement (102) de la première partie de vanne (100; 1100) comprennent des filetages correspondants, le manchon de raccordement (102) étant vissé dans l'embout de raccordement (51 ; 1051 ; 1061) du corps de vanne (50 ; 1050) en intercalant un joint d'étanchéité (103).

8. Collecteur de circuit de chauffage selon la revendication 6 ou 7, **caractérisé en ce que** le deuxième embout de raccordement (52 ; 1052 ; 1062) du corps de vanne (50 ; 1050) et le manchon de raccordement (201) de la deuxième partie de vanne (200; 1200) comprennent des filetages correspondants, le manchon de raccordement (201) étant vissé dans l'embout de raccordement (52 ; 1052 ; 1062) du corps de vanne (50 ; 1050) en intercalant un joint d'étanchéité (203).
